# EUROPEAN PATENT APPLICATION

(11) **EP 4 327 657 A1**
(43) Date of publication of application: **28.02.2024**
(21) Application number: 22791650.9
(22) Date of filing: 12.04.2022
(51) Int. Cl.: A01N 1/02

(54) **LID DEVICE AND CONTAINER DEPRESSURIZATION METHOD**

(30) Priority: 23.04.2021 JP 2021073349
(71) Applicant: SCREEN Holdings Co., Ltd., Kyoto-shi, Kyoto 602-8585 (JP)
(72) Inventor: KASAMATSU, Hiroo, Kyoto-shi, Kyoto 602-8585 (JP); YOSHIMOTO, Syuhei, Kyoto-shi, Kyoto 602-8585 (JP)
(74) Representative: Goddar, Heinz J.
(86) International application number: PCT/JP2022/017593
(87) International publication number: WO 2022/224876

(57) **Abstract**

A technique is provided that allows an appropriate reduction of pressure in a container in which biomedical tissue such an organ is contained. A covering device (3) is a device for sealing a container (2) in which biomedical tissue (9) is contained. The covering device (3) includes a cover main body (31), a seal member (33), and an exhaust port (41). The cover main body (31) closes an opening of the container (2). The seal member (33) is fixedly attached to the side of the cover main body (31) that faces the container (2). The seal member (33) seals clearance between the peripheral edge portion (25) of the container (2) and the cover main body (31) while being in contact with the peripheral edge portion (25) when the cover main body (31) is attached to the container (2). The exhaust port (41) is provided in the cover main body (31). The exhaust port (41) configures an exhaust passage through which air in the container (2) flows to the outside of the container (2) when the cover main body (31) is attached to the container (2).

## Description

### [Technical Field]

The present invention relates to a covering device and a method of reducing the pressure in a container.

### [Background Art]

In organ transplant operations such as liver transplants, an organ removed from the donor is temporarily preserved in vitro until the organ is transplanted into the recipient. At this time, so-called perfusion preservation may be conducted in which an organ is preserved with perfusion of blood vessels in the organ with a perfusate. Improvements in the take rate after transplantation have been reported as a result of this perfusion preservation.

A technique for circulating a perfusate to an organ is disclosed in, for example, Patent Literature (PTL) 1.

### [Citation List]

### [Patent Literature]

[PTL 1] International Publication No. 2015/187737

### [Summary of Invention]

### [Technical Problem]

It is known that venous blood circulation in an organ in the human abdominal cavity is made possible by positive pressure and negative pressure. Specifically, the positive pressure is derived from pressure produced by heart pumping and external pressure exerted on blood vessels by, for example, muscular contraction of the lower extremity. The negative pressure is produced by up-and-down motion of muscles of the abdominal cavity (in particular, diaphragm) caused by respiration.

In order to bring the environment in which an organ removed for transplantation is contained closer to the actual environment in the living body, it is considered desirable to construct a pressure fluctuation environment as described above. In particular, vasodilatation is expected to be caused by reducing the pressure in the organ. Thus, development of simple mechanisms to reduce the pressure in removed organs is important from the viewpoint of transplantation therapy. However, conventional technology has given no consideration to reducing the pressure in a container in which biomedical tissue such as an organ is contained.

It is an object of the present invention to provide a technique for appropriately reducing the pressure in a container in which biomedical tissue such as an organ is contained.

### [Solution to Problem]

To solve the problem described above, a first aspect is directed to a covering device for sealing a container in which biomedical tissue is contained. The covering device includes a cover main body that closes an opening of the container, a seal member fixedly attached to a side of the cover main body that faces the container, the seal member sealing clearance between the cover main body and a peripheral edge portion of the container while being in contact with the peripheral edge portion of the container when the cover main body is attached to the container, and an exhaust port provided in the cover main body and configuring an exhaust passage through which air in the container flows to an outside of the container when the cover main body is attached to the container.

A second aspect is directed to the covering device according to the first aspect, in which the exhaust port includes a check valve that prevents a backflow of air into the container.

A third aspect is directed to the covering device according to the first or second aspect, in which the exhaust port includes a filter that filtrates air.

A fourth aspect is directed to the covering device according to any one of the first to third aspects that further includes an exhauster connected to the exhaust port to exhaust air in the container to an outside through the exhaust port.

A fifth aspect is directed to the covering device according to any one of the first to fourth aspects that further includes a pressure sensor that detects pressure in the container when the cover main body is attached to the container.

A sixth aspect is directed to the covering device according to any one of the first to fifth aspects, in which the cover main body has a shape protruding on a side opposite to the container.

A seventh aspect is directed to the covering device according to any one of the first to sixth aspects that further includes a perfusion port provided in the cover main body to pass a perfusate that flows in the biomedical tissues contained in the container when the cover main body is attached to the container.

An eighth aspect is directed to the covering device according to any one of the first to seventh aspects, in which the seal member has a ring shape in plan view, and the seal member has a width greater than a width of the peripheral edge portion of the container.

A ninth aspect is directed to a system for reducing pressure in a container. The system includes a container in which biomedical tissue is contained; and the covering device according to any one of the first to eighth aspects.

A tenth aspect is directed to a method of reducing pressure in a container. The method includes a) preparing a container that contains biomedical tissue, b) after the operation a), closing an opening of the container by a covering device, and c) after the operation b), exhausting air in the container to an outside of the container. The covering device includes a cover main body that closes an opening of the container, a seal member fixedly attached to a side of the cover main body that faces the container, the seal member sealing clearance between the cover main body and a peripheral edge portion of the container while being in contact with the peripheral edge portion of the container when the cover main body is attached to the container, and an exhaust port provided in the cover main body and configuring an exhaust passage through which air in the container flows to an outside of the container when the cover main body is attached to the container. The operation b) includes bringing the seal member into contact with the peripheral edge portion of the container, and the operation c) is to exhaust air in the container to the outside of the container through the exhaust port.

An eleventh aspect is directed to the method of reducing pressure in a container according to the tenth aspect, in which the operation c) includes setting the pressure in the container to a value ranging from 0 mmHg to -30 mmHg.

### [Advantageous Effects of Invention]

The covering device according to the first aspect is capable of sealing the container in which biomedical tissue is contained, because the seal member seals the clearance between the peripheral edge portion of the container and the cover main body. The covering device is also capable of appropriately reducing the pressure in the container in which biomedical tissue is housed, by exhausting air in the container to the outside of the container via the exhaust port.

The covering device according to the second aspect is capable of suppressing a backflow of air because the exhaust port includes the check valve.

The covering device according to the third aspect is capable of suppressing contamination of the container because the exhaust port includes the filter.

The covering device according to the fourth aspect is capable of reducing the pressure in the container by exhausting air in the container via the exhauster.

The covering device according to the fifth aspect is capable of maintaining the container at an appropriate pressure by detecting the pressure in the container via the pressure sensor.

The covering device according to the sixth aspect is capable of enlarging a space that is formed by the cover main body and the container to contain biomedical tissue because the cover main body has a shape protruding on the side opposite to the container.

The covering device according to the seventh aspect is capable of circulating the perfusate to the biomedical tissue contained in the container via the perfusion port provided in the cover main body.

The covering device according to the eighth aspect is capable of easily bringing the seal member into abutment with the entire perimeter of the peripheral edge portion of the container because the seal member has a ring shape and has a width greater than the width of the peripheral edge portion of the container.

The method of reducing pressure in a container according to the ninth aspect allows sealing of the container in which biomedical tissue is contained, because the seal member seals the clearance between the cover main body and the peripheral edge portion of the container. This method also enables appropriately reducing the pressure in the container in which biomedical tissue is contained, by causing air in the container to be exhausted to the outside of the container via the exhaust port.

The method of reducing pressure in a container according to the tenth aspect allows sealing of the container in which biomedical tissue is contained, because the seal member seals the clearance between the cover main body and the peripheral edge portion of the container. This method also enables appropriately reducing the pressure in the container in which biomedical tissue is contained, by causing air in the container to be exhausted to the outside of the container via the exhaust port.

The method of reducing pressure in a container according to the eleventh aspect allows biomedical tissue to be preserved under pressure suitable for preservation.

### [Brief Description of Drawings]

Fig. 1 is a diagram showing a container pressure reducing system according to an embodiment.
Fig. 2 is a diagram showing the side of a cover main body that faces a container in the container pressure reducing system shown in Fig. 1.

### [Description of Embodiment]

Hereinafter, an embodiment of the present invention will be described with reference to the accompanying drawings. Note that constituent elements described in the embodiment are merely exemplary and do not intend to limit the scope of the present invention. To facilitate understanding of the drawings, the dimensions or number of each constituent element may be illustrated in an exaggerated or simplified manner as necessary in the drawings.

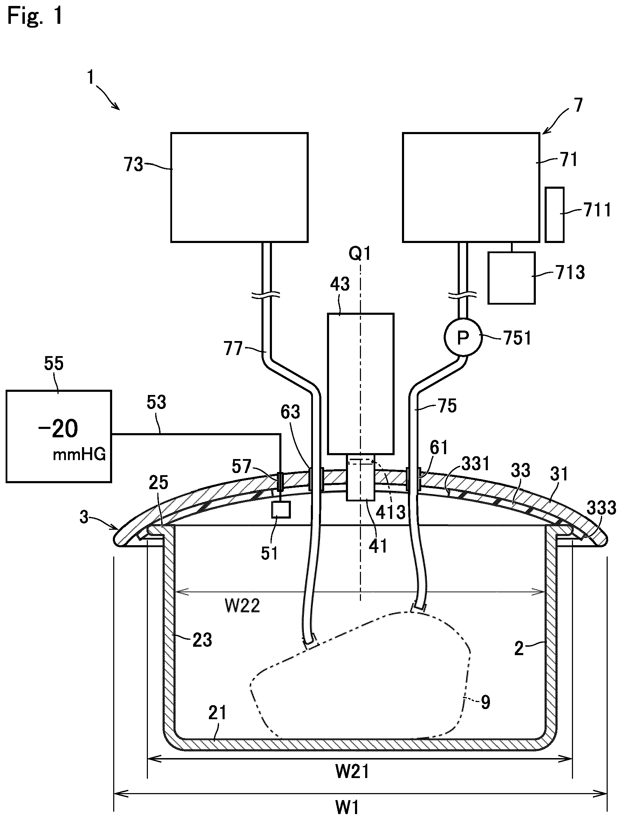

Fig. 1 is a diagram showing a container pressure reducing system 1 according to an embodiment. As shown in Fig. 1, the container pressure reducing system 1 includes a container 2 and a covering device 3. The container pressure reducing system 1 is a system for reducing the pressure in the container 2 in which biomedical tissue 9 is contained. Examples of the biomedical tissue 9 contained in the container 2 include human organs (e.g., lungs, heart, pancreas, liver, kidneys, large intestine, small intestine, stomach, gallbladder, urinary bladder, or the triple energizer in Chinese medicine) and human tissues (e.g., epithelial tissue, muscular tissue, fat tissue, or nervous tissue). The biomedical tissue 9 may also be an organ or tissue of any animal other than a human (e.g., rodents such as mice or rats, ungulates such as pigs, goats, or sheep, non-human primates such as chimpanzees, other non-human mammals, or non-mammalian animals).

The container pressure reducing system 1 is applicable for the purpose of, for example, transplantation in cases such as where an organ such as a liver removed from the donor is temporarily preserved in vitro until the organ is transplanted into the recipient. The container pressure reducing system 1 is also applicable in the case of incubating tissue in vitro.

### Container 2

The container 2 is a member for containing the biomedical tissue 9 therein. As shown in Fig. 1, the container 2 includes a disc-like bottom portion 21 and a cylindrical tube-like portion 23 that extends in an upward direction from the peripheral edge portion of the bottom portion 21. The container 2 also includes a loop-shaped (here, circular ringshaped) peripheral edge portion 25 that is located at the upper end of the tube-like portion 23 and forms a circular opening. Note that it is not absolutely necessary for the tube-like portion 23 of the container 2 to have a cylindrical shape. It is also not absolutely necessary for the container 2 to have a circular opening, and the shape of the opening may be oval, oblong, or polygonal.

### Covering Device 3

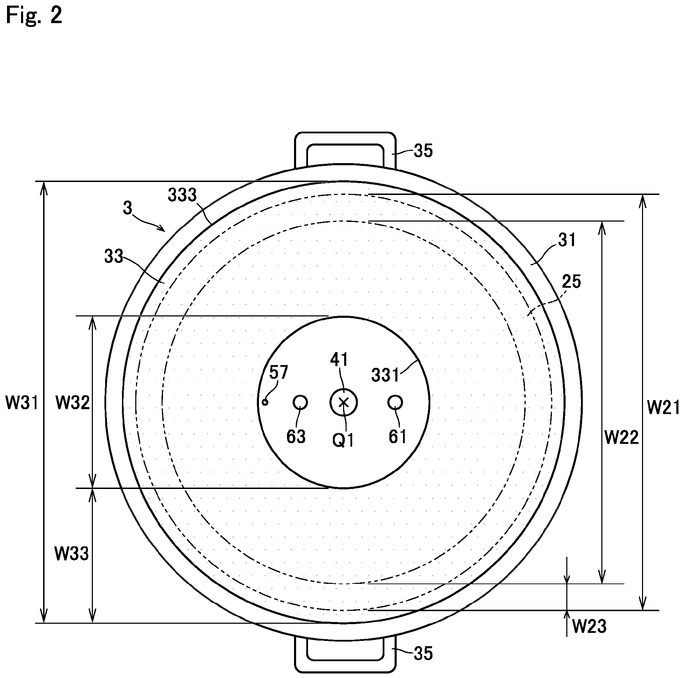

Fig. 2 is a plan view showing the side of the cover main body 31 that faces the container 2 in the container pressure reducing system 1 shown in Fig. 1. The covering device 3 is a device for sealing the container 2 in which the biomedical tissue 9 is contained. As will be described later, the covering device 3 is capable of reducing the pressure in the container 2 while sealing the container 2. As shown in Fig. 1, the covering device 3 includes a cover main body 31, a seal member 33, and an exhaust port 41.

In the following description, an axis that passes through the center of the cover main body 31 and that extends in the thickness direction of the cover main body 31 is referred to as the "central axis Q1." As shown in Fig. 1, when the cover main body 31 is attached to the container 2, the container 2 is arranged on one side in the axial direction with respect to the cover main body 31. The peripheral edge portion 25 of the container 2 is arranged around the central axis Q1. Hereinafter, one side in the axial direction is referred to as the lower side, and the other side in the axial direction is referred to as the upper side. A direction orthogonal to the central axis Q1 is referred to as a radial direction. One side in the radial direction toward the central axis Q1 is referred to as "radially inward," and the other side in the radial direction away from the central axis Q1 is referred to as " radially outward."

The cover main body 31 is a member that closes the opening of the container 2. As shown in Fig. 1, the cover main body 31 has such a shape that central portion thereof protrudes upward in section. In the present example, the cover main body 31 has an arc shape. The cover main body 31 has a plate-like shape having a concave lower surface and a convex upper surface. As shown in Fig. 2, the cover main body 31 has a circular shape in plan view. As shown in Fig. 1, the cover main body 31 has a radial outside dimension W1 (here, outside diameter) greater than a radial outside dimension W21 (here, outside diameter) of the peripheral edge portion 25 of the container 2.

The upwardly protruding shape of the cover main body 31 enlarges the space formed by the cover main body 31 and the container 2 to contain the biomedical tissue 9. This shape also improves pressure resistance of the cover main body 31 when the container 2 is in a reduced pressure condition.

It is not absolutely necessary for the cover main body 31 to have an arc shape. For example, the cover main body 31 may have a flat plate-like shape. As another alternative, the cover main body 31 may have such a shape that the central portion thereof protrudes downward.

As shown in Fig. 2, the outer peripheral portion of the cover main body 31 is provided with a pair of handles 35. The pair of handles 35 is arranged to face each other. The user is able to carry the cover main body 31 by holding the pair of handles 35. In the case where the covering device 3 reduces the pressure in the container 2 while sealing the container 2, the user is able to carry the container 2 together with the cover main body 31 by holding the pair of handles 35.

The seal member 33 is a member that seals clearance between the cover main body 31 and the peripheral edge portion 25 of the container 2 while being in contact with the peripheral edge portion 25 of the container 2 when the cover main body 31 is attached to the container 2. Preferably, the seal member 33 may include an elastic material. For example, the seal member 33 may be formed of silicone rubber or rubber such as polyurethane rubber. The seal member 33 comes in tight contact with the peripheral edge portion 25 of the container 2 by becoming elastically deformed in accordance with the shape of the peripheral edge portion 25. Accordingly, the clearance between the cover main body 31 and the peripheral edge portion 25 of the container 2 is sealed.

As shown in Fig. 2, the seal member 33 is arranged on the lower surface of the cover main body 31. The seal member 33 is arranged on the side of the cover main body 31 that faces the container 2. For example, the seal member 33 may be fixedly attached to the cover main body 31 with an adhesive. Note that the method of fixedly attaching the seal member 33 is not limited to an adhesive. For example, the seal member 33 may be fixedly attached to the cover main body 31 by being pressed into a groove formed in the cover main body 31.

As shown in Fig. 2, the seal member 33 has a loop-shape (here, circular ringshaped) as well as a plate-like shape in plan view. As shown in Fig. 1, the seal member 33 has a shape extending along the lower surface of the cover main body 31.

As shown in Fig. 2, a radial outside dimension W31 (here, outside diameter) of an outer peripheral portion 333 of the seal member 33 is greater than an outside dimension W21 of the peripheral edge portion 25 of the container 2 (W31 > W21). A radial inside dimension W32 (here, inside diameter) of an inner peripheral portion 331 of the seal member 33 is smaller than a radial inside dimension W22 (here, inside diameter) of the peripheral edge portion 25 of the container 2 (W32 < W22). A radial width W33 of the seal member 33 (W33 = W31 - W32) is greater than a radial width W23 of the peripheral edge portion 25 (W23 = W21 - W22) (W33 > W23). By setting each dimension of the seal member 33 in this way, it is possible to easily bring the seal member 33 into abutment with the peripheral edge portion 25 of the container 2. Since the entire perimeter of the peripheral edge portion 25 abuts on the seal member 33, the clearance between the container 2 and the cover main body 31 can be effectively sealed by the seal member 33.

In transplantation therapy sites, a commercially available bowl may be used as the container 2 for containing an organ. The commercially available bowl comes in a wide variety, and the dimensions of the peripheral edge portion of an opening (opening portion) may vary depending on each bowl. In view of this, the seal member 33 is made to have dimensions as large as possible (in particular, width W33). In this case, even if the dimensions of the opening varies depending on each bowl., it is possible to favorably seal each bowl by the single type of covering device 3.

As shown in Fig. 2, on the lower surface of the cover main body 31, the area of a region that is covered with the seal member 33 may preferably be greater than the area of a region that is not covered with the seal member 33. In this way, by increasing the area of the region of the cover main body 31 that is covered with the seal member 33, it is possible to seal the container 2 by the same covering device 3 even if the dimensions of the opening of the container 2 are changed.

The exhaust port 41 is provided in the cover main body 31. When the cover main body 31 is attached to the container 2, the exhaust port 41 configures an exhaust passage through which air in the container 2 flows to the outside of the container 2.

As shown in Figs. 1 and 2, the exhaust port 41 is arranged inward (radially inward) of the inner peripheral portion 331 of the seal member 33. The exhaust port 41 is arranged in the center of the cover main body 31. The exhaust port 41 is arranged in the middle of the pair of handles 35. By arranging the exhaust port 41 in the center, it is possible to uniformly reduce the pressure in the container 2. Note that it is not absolutely necessary for the exhaust port 41 to be arranged in the central portion.

As shown in Fig. 1, the exhaust port 41 includes a filter 413. The filter 413 has the function of filtrating air in the exhaust passage of the exhaust port 41. The filter 413 provided in the exhaust port 41 enables purifying air that flows into the container 2 through the exhaust port 41.

As shown in Fig. 1, the covering device 3 includes a pressure reducer 43. The pressure reducer 43 is a device for reducing the pressure in the container 2. The pressure reducer 43 is connected to an exhaust outlet of the exhaust port 41. When the cover main body 31 is attached to the container 2, the pressure reducer 43 exhausts air in the container 2 to the outside of the container 2 through the exhaust port 41. For example, the pressure reducer 43 may be a vacuum pump. The pressure reducer 43 is one example of an exhauster.

Preferably, the pressure reducer 43 may be detachable from the exhaust port 41 and may be of a handy-held type that allows the user to carry the pressure reducer by one hand. Alternatively, the pressure reducer 43 may be installed and used at a certain place.

As shown in Fig. 1, the covering device 3 includes a pressure sensor 51. When the cover main body 31 is attached to the container 2, the pressure sensor 51 detects the pressure in the container 2. The pressure sensor 51 is arranged downward of the cover main body 31 (on the side facing the container 2). As shown in Fig. 1, the pressure sensor 51 is connected to a display 55 arranged outside the container 2 via an electric cable 53. The display 55 displays a pressure value that is output from the pressure sensor 51. Displaying the pressure value detected by the pressure sensor 51 on the display 55 allows the user to easily check the pressure in the container 2. As shown in Fig. 1, the cover main body 31 includes an electric-cable port 57. The electric-cable port 57 forms a hole in which the electric cable 53 is inserted. The electric-cable port 57 is arranged inward (radially inward) of the inner peripheral portion 331 of the seal member 33.

As shown in Figs. 1 and 2, the covering device 3 includes a supply port 61 and a collection port 63. The supply port 61 and the collection port 63 are provided in the cover main body 31. As shown in Fig. 2, the supply port 61 and the collection port 63 are arranged inward (radially inward) of the inner peripheral portion 331 of the seal member 33.

The supply port 61 configures a feed opening for supplying a perfusate to the biomedical tissue 9 placed in the container 2. The collection port 63 configures a collection opening for correcting a perfusate that has passed through the inside of the biomedical tissue 9.

The supply port 61 and the collection port 63 are each an example of a perfusion port for passing a perfusate flowing in the biomedical tissue 9 contained in the container 2 when the cover main body 31 is attached to the container 2.

As shown in Fig. 1, the container pressure reducing system 1 includes a perfusion device 7. The perfusion device 7 is a device that circulates a perfusate to the biomedical tissue 9 contained in the container 2. The perfusion device 7 includes a supply tank 71, a collection tank 73, a supply tube 75, and a collection tube 77.

The supply tank 71 is a container that stores a perfusate supplied to the biomedical tissue 9. The collection tank 73 is a container that stores a perfusate collected from the biomedical tissue 9. For example, the perfusate may be an ETK solution or an UW solution. The supply tank 71 may be connected to a temperature control mechanism 711 or a gas exchange mechanism 713. The temperature control mechanism 711 controls the temperature of the perfusate stored in the supply tank 71. The gas exchange mechanism 713 supplies a gas such as oxygen to the perfusate stored in the supply tank 71 so as to dissolve the gas in the perfusate. Note that it is not absolutely necessary to mount the temperature control mechanism 711 and the gas exchange mechanism 713 on the supply tank 71. The temperature control mechanism 711 and the gas exchange mechanism 713 may, for example, be connected to the supply tube 75.

The supply tube 75 configures a passage of the perfusate that is fed from the supply tank 71 to the biomedical tissue 9. One end of the supply tube 75 is connected to the supply tank 71. The supply tube 75 is inserted in the supply port 61 of the cover main body 31. The other end of the supply tube 75 is connected to the biomedical tissue 9 contained in the container 2. In the case where the biomedical tissue 9 is a liver, the other end of the supply tube 75 is connected to, for example, the portal vein of the liver.

The supply tube 75 includes a pump 751 provided at some midpoint. The pump 751 applies pressure into the supply tube 75 so that the perfusate is sent under pressure from the supply tank 71 toward the biomedical tissue 9. Note that the pressure may also be applied into the supply tank 71 so as to send the perfusate from the supply tank 71 to the biomedical tissue 9.

The collection tube 77 configures a passage of the perfusate that is sent from the biomedical tissue 9 to the collection tank 73. One end of the collection tube 77 is connected to the biomedical tissue 9. In the case where the biomedical tissue 9 is a liver, one end of the collection tube 77 is connected to the vein (suprahepatic inferior vena cava (SH-IVC) or infrahepatic inferior vena cava (IH-IVC)) of the liver. The collection tube 77 is inserted in the collection port 63 of the cover main body 31. The other end of the collection tube 77 is connected to the collection tank 73. Note that the collection tube 77 may include a pump provided at some midpoint in order to send the perfusate under pressure from the biomedical tissue 9 to the collection tank 73.

The perfusate collected in the collection tank 73 may be discarded as appropriate. Alternatively, the perfusate collected in the collection tank 73 may be filtrated by, for example, a filter and returned to the supply tank 71. As another alternative, the collection tank 73 may be omitted. In this case, the other end of the collection tube 77 may be connected to the supply tank 71 so as to allow the perfusate that has passed through the biomedical tissue 9 to be circulated back to the supply tank 71.

### Exemplary Usage of Covering Device 3

Next, exemplary usage of the covering device 3 will be described.

First, as shown in Fig. 1, the container 2 that contains the biomedical tissue 9 is prepared. Then, the supply tube 75 and the collection tube 77 are connected to the biomedical tissue 9 contained in the container 2. Then, the pump 751 is driven with the supply tube 75 and the collection tube 77 connected to the biomedical tissue 9 contained in the container 2. Accordingly, the perfusate in the supply tank 71 is supplied to the biomedical tissue 9, and the perfusate is collected from the biomedical tissue 9 to the collection tank 73.

When the supply tube 75 and the collection tube 77 are connected to the biomedical tissue 9, the opening of the container 2 is closed by the cover main body 31 of the covering device 3. At this time, as shown in Fig. 1, the seal member 33 on the lower surface side of the cover main body 31 abuts on the entire perimeter of the peripheral edge portion 25 of the container 2.

When the opening of the container 2 is closed by the cover main body 31, the pressure reducer 43 of the covering device 3 is driven. Accordingly, the air in the container 2 is exhausted to the outside of the container 2 and the pressure in the container 2 is reduced. This expands the blood vessels in the biomedical tissue 9 and reduces resistance along the passage of the blood vessels. Therefore, it is possible to favorably circulate the perfusate to the blood vessels in the biomedical tissue 9. For example, in the case where the biomedical tissue 9 is a liver, the pressure reducer 43 reduces the pressure in the container 2 so that the pressure value falls within the range of 0 mmHg to -30 mmHg.

The pressure reducer 43 may alternately exhaust air from the container 2 and stop the exhaust so that the air pressure in the container 2 periodically transitions between a low-pressure condition in which air pressure in the container 2 is less than atmospheric pressure and a high-pressure (e.g., atmospheric-pressure) condition. This pressure-reducing operation allows construction of a pressure fluctuation environment in the container 2 as in the living body. Accordingly, the biomedical tissue 9 can be placed in an environment close to the environment in the living body. In the case of circulating a perfusate into the biomedical tissue 9, appropriate circulation of the perfusate into the biomedical tissue 9 allows appropriate preservation or culture of the biomedical tissue 9.

The covering device 3 may include a controller for controlling the pressure reducer 43. The controller may be configured as a computer that includes a processor such as a CPU, a RAM, and auxiliary memory. The pressure reducer 43 may be controlled by the processor operating in accordance with programs installed in the auxiliary memory. Note that the controller may be electrically connected to the pressure sensor 51. Alternatively, the controller may control the pressure reducer 43 on the basis of the pressure value output from the pressure sensor 51 so that the pressure in the container 2 becomes closer to a target value.

As described above, the covering device 3 seals the clearance between the cover main body 31 and the container 2 by bringing the seal member 33 into abutment with the peripheral edge portion 25 of the container 2. This allows effective reduction of the pressure in the container 2. Accordingly, the biomedical tissue 9 can be placed in a low-pressure environment. Beside, sterilization in the container 2 is ensured by reducing the pressure in the container 2. Moreover, by reducing the pressure in the container 2, it is possible to reduce the likelihood that the liquid in the container 2 will scatter to the outside of the container 2.

The presence of the filter 413 in the exhaust port 41 suppresses air contamination inside the container 2.

The pressure reducer 43 can reduce the pressure in the container 2 by exhausting air in the container 2 to the outside of the container 2.

The pressure sensor 51 allows the interior of the container to be controlled at an appropriate pressure by detecting the pressure in the container 2.

Note that the exhaust port 41 may include a check valve. The check valve is a valve that prevents the air flowing through the exhaust passage in the exhaust port 41 from flowing back into the container 2, when the cover main body 31 is attached to the container 2. The presence of the check valve allows efficient reduction of the pressure in the container 2 when the pressure reducer 43 exhausts air in the container 2 to the outside of the container 2.

While the invention has been shown and described in detail, the foregoing description is in all aspects illustrative and not restrictive. It is therefore understood that numerous modifications and variations that are not described above can be devised without departing from the scope of the invention. The configurations in the embodiment and variations described above may be appropriately combined or omitted as long as there are no mutual inconsistencies.

### [Reference Signs List]

- 1: container pressure reducing system
- 2: container
- 3: covering device
- 9: biomedical tissue
- 25: peripheral edge portion
- 31: cover main body
- 33: seal member
- 41: exhaust port
- 43: pressure reducer
- 51: pressure sensor
- 61: supply port
- 63: collection port
- 413: filter

## Claims

1. A covering device for sealing a container in which biomedical tissue is contained, the covering device comprising:
a cover main body that closes an opening of the container;
a seal member fixedly attached to a side of the cover main body that faces the container, the seal member sealing clearance between the cover main body and a peripheral edge portion of the container while being in contact with the peripheral edge portion of the container when the cover main body is attached to the container; and
an exhaust port provided in the cover main body and configuring an exhaust passage through which air in the container flows to an outside of the container when the cover main body is attached to the container.

2. The covering device according to claim 1, wherein
the exhaust port includes a check valve that prevents a backflow of air into the container.

3. The covering device according to claim 1 or 2, wherein
the exhaust port includes a filter that filtrates air.

4. The covering device according to any one of claims 1 to 3, further comprising:
an exhauster connected to the exhaust port to exhaust air in the container to an outside through the exhaust port.

5. The covering device according to any one of claims 1 to 4, further comprising:
a pressure sensor that detects pressure in the container when the cover main body is attached to the container.

6. The covering device according to any one of claims 1 to 5, wherein
the cover main body has a shape protruding on a side opposite to the container.

7. The covering device according to any one of claims 1 to 6, further comprising:
a perfusion port provided in the cover main body to pass a perfusate that flows in the biomedical tissues contained in the container when the cover main body is attached to the container.

8. The covering device according to any one of claims 1 to 7, wherein
the seal member has a ring shape in plan view, and
the seal member has a width greater than a width of the peripheral edge portion of the container.

9. A container pressure reducing system comprising:
a container in which biomedical tissue is contained; and
the covering device according to any one of claims 1 to 8.

10. A container pressure reducing method comprising:
a) preparing a container that contains biomedical tissue;
b) after the operation a), closing an opening of the container by a covering device; and
c) after the operation b), exhausting air in the container to an outside of the container,
wherein the covering device includes:
a cover main body that closes an opening of the container;
a seal member fixedly attached to a side of the cover main body that faces the container, the seal member sealing clearance between the cover main body and a peripheral edge portion of the container while being in contact with the peripheral edge portion of the container when the cover main body is attached to the container; and
an exhaust port provided in the cover main body and configuring an exhaust passage through which air in the container flows to an outside of the container when the cover main body is attached to the container,
the operation b) includes bringing the seal member into contact with the peripheral edge portion of the container, and
the operation c) is to exhaust air in the container to the outside of the container through the exhaust port.

11. The container pressure reducing method according to claim 10, wherein
the operation c) includes setting the pressure in the container to a value ranging from 0 mmHg to -30 mmHg.
